# EUROPÄISCHE PATENTSCHRIFT

(11) **EP 2 985 573 B1**
(45) Veröffentlichungstag und Bekanntmachung des Hinweises auf die Patenterteilung: **11.10.2017**
(21) Anmeldenummer: 14180836.0
(22) Anmeldetag: 13.08.2014
(51) Int. Cl.: G01D 11/24, G01D 11/30

(54) **Befestigungsvorrichtung für ein Elektronikgerät und Verfahren zum Befestigen eines Elektronikgeräts**
Apparatus and method of fastening an electronic device
Appareil et procédé de fixation d'un dispositif électronique

(43) Veröffentlichungstag der Anmeldung: 17.02.2016
(73) Patentinhaber: SICK AG, 79183 Waldkirch (DE)
(72) Erfinder: Impidjati, Dr., 79312 Emmendingen (DE); Machul, Dr. Olaf, 79249 Merzhausen (DE)
(74) Vertreter: Rieger, Daniel-Stephan

(56) Entgegenhaltungen:
- EP-A2- 0 677 722
- DE-A1- 10 049 111
- GB-A- 2 302 611
- US-A- 6 000 670
- US-A1- 2005 174 748
- US-A1- 2014 029 214
- US-B1- 7 281 940

## Beschreibung

Die vorliegende Erfindung betrifft eine Befestigungsvorrichtung für ein Elektronikgerät nach dem Oberbegriff von Anspruch 1 und ein Verfahren zum Befestigen eines Elektronikgeräts nach dem Oberbegriff von Anspruch 7. Die EP 1 492 977 A1 offenbart einen Befestigungssockel zum Halten eines elektrischen Gerätes mit einer Aufnahmeöffnung zur Aufnahme eines Anschlussstutzens des elektrischen Geräts und mit einem Verriegelungsschwenkhebel zum Fixieren des Anschlussstutzens in der Aufnahmeöffnung, wobei der Verriegelungsschwenkhebel in eine Verriegelungs- und eine Offenstellung verschwenkbar ist, wobei der Verriegelungsschwenkhebel einen vorstehenden Keil aufweist und der Keil zum wenigstens teilweise formschlüssigen Eingriff mit einer im Anschlussstutzen vorgesehenen Aussparung bei in Verriegelungsstellung geschwenktem Verriegelungsschwenkhebel ausgebildet ist.

Beim Stand der Technik kann sich der Verriegelungsschwenkhebel aufgrund von Erschütterungen und Vibrationen aus seiner Verriegelungsstellung lösen, so dass die Sensorfunktion beispielsweise in einer komplexen Automatisierungsanlage ggf. nicht mehr gegeben ist. Dadurch ist die Verfügbarkeit einer solchen Anlage gefährdet. Weiter kann auch durch menschliches Versagen, beispielsweise beim Vergessen des Anlegens des Verriegelungshebels oder bei einer Fehlbedienung es ebenso zum Verlust der Sensorfunktion kommen, da der Sensor sich ggf. aus dem Befestigungssockel löst. Die EP 0 677 722 A2 offenbart einen Schieber, um eine Flanschöffnung zu verschließen, in der ein Rohrstück angeordnet ist.

Die US 6 000 670 offenbart einen schwing-/schockbeständigen Gerätefuß.

Die US 2005/017 47 48 A1 offenbart eine Anordnung von elektrischen Leiterplatten mit Abstandshaltern.

Die US 2014/0029214 A1 offenbart einen Verriegelungsschieber für eine Leiterplatte in einem Gehäuse.

Die US 7 281 940 B1 offenbart ein entfernbares elektrisches Interface mit einem Fixiermittel.

Die GB 2 302 611 A offenbart eine Batteriefachabdeckung mit einer federnd gehaltenen Entriegelungstaste.

Die DE 100 49 111 A1 offenbart einen Mehrwegschalter und ein elektronisches Gerät.

Eine Aufgabe der Erfindung besteht darin, eine verbesserte Befestigungsvorrichtung bereitzustellen. Die verbesserte Befestigungsvorrichtung soll eine sichere Befestigung bei Schwing-/Schockbelastung gewährleisten. Weiter soll die Befestigungsvorrichtung eine Fehlbedienung vermeiden.

Die US 2005/017 47 48 A1 offenbart eine Anordnung von elektrischen Leiterplatten mit Abstandshaltern.

Die US 2014/0029214 A1 offenbart einen Verriegelungsschieber für eine Leiterplatte in einem Gehäuse.

Eine Aufgabe der Erfindung besteht darin, eine verbesserte Befestigungsvorrichtung bereitzustellen. Die verbesserte Befestigungsvorrichtung soll eine sichere Befestigung bei Schwing-/Schockbelastung gewährleisten. Weiter soll die Befestigungsvorrichtung eine Fehlbedienung vermeiden. Die Erfindung ist so, wie sie in den Ansprüchen definiert ist. Die Aufgabe wird gemäß Anspruch 1 gelöst durch eine Befestigungsvorrichtung für ein Elektronikgerät mit einem Befestigungsflansch und mit einem Befestigungssockel, wobei der Befestigungsflansch in einer Durchgangsöffnung in dem Befestigungssockel positionierbar ist und wobei der Befestigungsflansch in dem Befestigungssockel verriegelbar ist, wobei ein Fixierungsschieber verschiebbar an dem Befestigungssockel angeordnet ist, um den Befestigungsflansch in dem Befestigungssockel zu verriegeln und/oder zu lösen.

Die Aufgabe wird weiter gelöst durch ein Verfahren nach Anspruch 7 zum Befestigen eines Elektronikgeräts mit einem Befestigungsflansch in einem Befestigungssockel, wobei der Befestigungsflansch in dem Befestigungssockel positioniert wird, wobei der Befestigungsflansch in dem Befestigungssockel verriegelt wird, wobei ein Fixierungsschieber angeordnet ist, der an dem Befestigungssockel verschoben wird, um den Befestigungsflansch in dem Befestigungssockel zu verriegeln und/oder zu lösen.

Bei dem Elektronikgerät handelt es sich bevorzugt um einen Sensor bzw. ein Sensorgehäuse.

Dadurch dass der Fixierungsschieber verschiebbar an dem Befestigungssockel angeordnet ist, um den Befestigungsflansch in dem Befestigungssockel zu verriegeln, ist eine sichere Befestigung des Elektronikgeräts bzw. des Sensorgehäuses in dem Befestigungssockel gewährleistet. Gegenüber einem Verriegelungsschwenkhebel nach dem Stand der Technik bietet ein Fixierungsschieber eine bessere Fixierung, da durch den Verschiebeweg bei der Verschiebung des Fixierungsschiebers eine bessere Sicherung bei Schwing- und Schockbelastung der Befestigungsvorrichtung gewährleistet ist. Der verschobene Fixierungsschieber kann sich bei einer Schwing- bzw. Schockbelastung schlechter lösen als ein Verriegelungsschwenkhebel nach dem Stand der Technik.

In einer bevorzugten Ausführung der Erfindung weist der Fixierungsschieber eine erste Feder auf, wobei der Fixierungsschieber durch die Feder in der Verriegelungsstellung positioniert ist.

Durch die erste Feder wird der Fixierungsschieber automatisch in der Verriegelungsstellung positioniert bzw. fixiert. Zur Montage des Befestigungsflansches muss der Fixierungsschieber betätigt werden, so dass die erste Feder beispielsweise zusammengedrückt wird. Nachdem der Befestigungsflansch an der korrekten Position zur Montage positioniert ist, kann der Fixierungsschieber losgelassen werden und die erste Feder schiebt den Fixierungsschieber ohne manuelle Betätigung zurück in die Verriegelungsstellung, wodurch eine sichere Befestigung gewährleistet ist und eine Fehlbedienung vermieden ist.

In der Erfindung weist der Fixierungsschieber eine Betätigungsfläche auf, wobei der Fixierungsschieber durch Verschieben durch die Betätigungsfläche in eine Montageposition für den Befestigungsflansch gebracht ist, wobei der Befestigungsflansch in eine Durchgangsöffnung des Befestigungssockels einführbar ist.

Wie bereits erwähnt, wird zur Montage des Befestigungsflansches der Fixierungsschieber betätigt, so dass die erste Feder beispielsweise zusammengedrückt wird. Zur Betätigung des Fixierungsschiebers ist gemäß dieser Ausführungsform ein Betätigungsmittel bzw. eine Betätigungsfläche vorgesehen. Die Betätigungsfläche ist bevorzugt für eine Betätigung mit einem Finger ausgebildet. D. h. die Betätigungsfläche weist ca. eine Betätigungsfläche von ca. 1 cm² auf. Dadurch kann der Fixierungsschieber ohne Werkzeuge bedient werden. Die Betätigungsfläche kann auch größer ausgeführt sein, um eine robustere und sicherere Betätigung zu gewährleisten. Jedoch kann die Betätigungsfläche auch kleiner ausgebildet sein, beispielsweise wenn die Betätigungsfläche nur mit einem Werkzeug, beispielsweise einem Schraubendreher oder einem ähnlichen Werkzeug betätigbar sein soll.

In der Erfindung ist der Fixierungsschieber in der Montageposition durch einen Verriegelungsschieber gehalten. Dadurch braucht der Fixierungsschieber nicht ständig betätigt werden, um die Montageposition einzunehmen. Vielmehr reicht eine einzige Betätigung des Fixierungsschiebers, so dass der Fixierungsschieber durch den Verriegelungsschieber in der Montageposition fixiert gehalten wird. Dadurch kann der Befestigungsflansch ohne eine zusätzliche Betätigung in den Befestigungssockel eingeführt werden. Nachdem der Befestigungsflansch in dem Befestigungssockel platziert ist, wird der Verriegelungsschieber wieder gelöst und der Fixierungsschieber gelangt durch die erste Feder wieder in die Verriegelungsstellung zurück. Durch die Federkraft der ersten Feder wird der Fixierungsschieber ruckartig in die Verriegelungsstellung gebracht, wodurch mechanisch ein akustisches Rückmeldesignal erzeugt wird, so dass quasi ein Einrasten des Befestigungsflansches hörbar ist und so eine akustische Montagekontrolle erzeugt wird.

In Weiterbildung der Erfindung ist der Verriegelungsschieber durch eine zweite Feder positioniert bzw. fixiert. Wie bereits erwähnt, wird der Fixierungsschieber in der Montageposition durch einen Verriegelungsschieber gehalten. In dieser Position wird der Verriegelungsschieber durch die zweite Feder fixiert bzw. positioniert gehalten. Durch die zweite Feder nimmt der Verriegelungsschieber ohne eine Betätigung immer eine Position ein, um den Fixierungsschieber in einer Montageposition zu halten.

In Weiterbildung der Erfindung ist der Verriegelungsschieber beim Einführen des Befestigungsflansches in den Befestigungssockel durch das Sensorgehäuse verschiebbar, wodurch eine Verriegelung des Fixierungsschiebers durch den Verriegelungsschieber gelöst ist, wodurch der Fixierungsschieber von einer Montageposition in die Verriegelungsstellung durch die erste Feder bewegt ist. Gemäß dieser Ausbildung der Erfindung wird der Verriegelungsschieber durch das Sensorgehäuse selbst in eine Position verschoben, in der der Fixierungsschieber durch die erste Feder in die Verriegelungsstellung gelangt. Dadurch wird quasi automatisch durch das Einführen des Sensorgehäuses mit dem Befestigungsflansch eine Verriegelung des Sensorgehäuses vorgenommen, ohne dass eine zusätzliche Betätigung des Fixierungsschiebers oder einer anderen Komponente erfolgen muss.

In Weiterbildung der Erfindung ist beim Lösen des Befestigungssockels durch den Fixierungsschieber der Befestigungssockel durch den Verriegelungsschieber aufgrund der zweiten Feder auswerfbar.

Wird das Betätigungsmittel des Fixierungsschiebers wieder betätigt, so dass der Befestigungssockel wieder eine Montageposition einnimmt, wird der Sensor durch die zweite Feder und den Verriegelungsschieber automatisch aus dem Befestigungssockel ausgeworfen.

In Weiterbildung der Erfindung sind Blockiermittel vorgesehen, wodurch der Fixierungsschieber in der Verriegelungsstellung blockierbar ist. Das Blockiermittel ist manuell betätigbar. Bei dem Blockiermittel kann es sich um einen Schieber, eine Taste, ein Rastmittel oder ähnliches handeln. Durch das manuell betätigte Blockiermittel ist gewährleistet, dass das Elektronikgerät bzw. das Sensorgehäuse nicht durch ein versehentliches Betätigen des Fixierungsschiebers bzw. des Betätigungsmittels gelöst wird, so dass dieses in die Montageposition gelangen würde, so dass das Elektronikgerät bzw. das Sensorgehäuse nicht mehr fixiert bzw. verriegelt wäre. Bei betätigtem Blockiermittel kann der Fixierschieber bzw. das Betätigungsmittel nicht betätigt werden. Erst nach einem Lösen des Blockiermittels kann der der Fixierschieber bzw. das Betätigungsmittel betätigt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 und 2: eine erfindungsgemäße Befestigungsvorrichtung;
- Figur 3: einen Befestigungssockel in einer perspektivischen Ansicht;
- Figur 4: einen Befestigungssockel in einer Explosionsdarstellung;
- Figur 5 und 6: einen Befestigungssockel mit den Teilen aus Figur 4 in einem montierten Zustand;
- Figur 7 und: 8 ein Sensorgehäuse mit einem Befestigungsflansch und einem Befestigungssockel in einer Schnittdarstellung;
- Figur 9: einen Befestigungssockel mit einem Fixierungsschieber und dem Verriegelungsschieber;
- Figur 10: einen Befestigungssockel mit einem Fixierungsschieber und einem Verriegelungsschieber in einer Schnittdarstellung;
- Figur 11: einen Befestigungssockel mit einem Fixierungsschieber und einem Verriegelungsschieber;
- Figur 12: einen Befestigungssockel mit einem Fixierungsschieber und einem Verriegelungsschieber in einer Schnittdarstellung;
- Figur 13 und 14: eine Schnittdarstellung eines Befestigungssockels;
- Figur 15 und 16: eine perspektivische Darstellung eines Befestigungssockels mit einem Fixierungsschieber und einem Verriegelungsschieber.

In den nachfolgenden Figuren sind identische Teile mit identischen Bezugszeichen versehen.

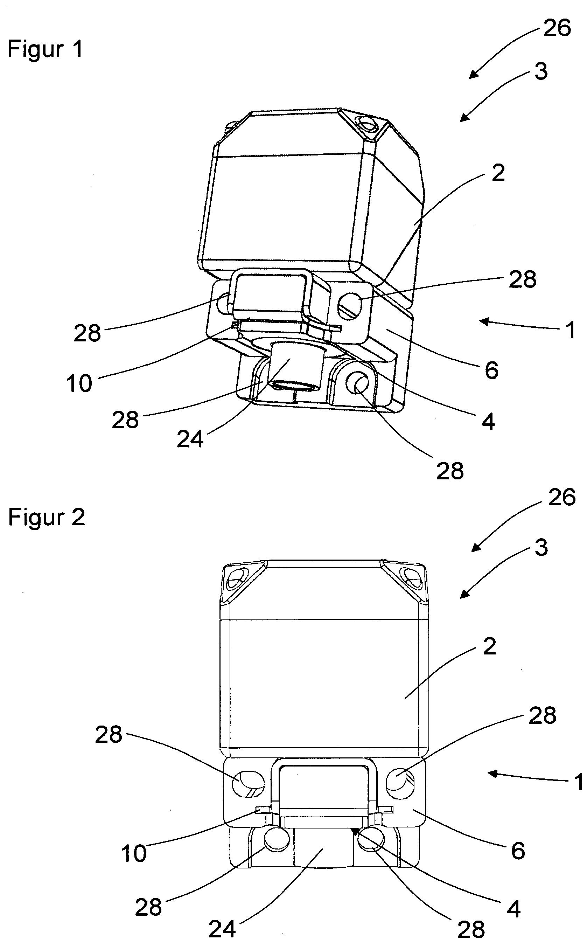

Figur 1 zeigt eine Befestigungsvorrichtung 1 für ein Elektronikgerät 3 bzw. ein Sensorgehäuse 2 mit einem Befestigungsflansch 4 und mit einem Befestigungssockel 6, wobei der Befestigungsflansch 4 in einer Durchgangsöffnung 8 in dem Befestigungssockel 6 positionierbar ist und wobei der Befestigungsflansch 4 in dem Befestigungssockel 6 verriegelbar ist, wobei ein Fixierungsschieber 10 verschiebbar an dem Befestigungssockel 6 angeordnet ist, um den Befestigungsflansch 4 in dem Befestigungssockel 6 zu verriegeln und/oder zu lösen.

Weiter zeigt Figur 1 ein Verfahren zum Befestigen eines Elektronikgeräts 3 bzw. eines Sensorgehäuses 2 mit einem Befestigungsflansch 4 in einem Befestigungssockel 6, wobei der Befestigungsflansch 4 in dem Befestigungssockel 6 positioniert wird, wobei der Befestigungsflansch 4 in dem Befestigungssockel 6 verriegelt wird, wobei ein Fixierungsschieber 10 angeordnet ist, der an dem Befestigungssockel 6 verschoben wird, um den Befestigungsflansch 4 in dem Befestigungssockel 6 zu verriegeln und/oder zu lösen.

Der Sensor 26 in dem Sensorgehäuse 2 kann beispielsweise ein induktiver Näherungssensor sein, um metallische Objekte zu detektieren. Der Sensor 26 kann jedoch auch ein kapazitiver oder ein optischer Sensor sein. Das Sensorgehäuse 2 gemäß Figur 1 ist würfelförmig ausgebildet, wobei an einer Seite des Sensorgehäuses 2 der Befestigungsflansch 4 angeordnet ist. Der Befestigungsflansch 4 weist eine zylinderartige oder zylindrische Form auf. Durch die zylindrische Form des Befestigungsflansches 4 kann dieser in dem Befestigungssockel 6 drehbar gelagert sein.

Am Ende des Befestigungsflansches 4 ist eine elektrische Schnittstelle 24, beispielsweise ein Kontaktstecker oder eine Kontaktbuchse angeordnet. Über die elektrische Schnittstelle wird der Sensor 26 mit Energie versorgt und die elektronischen Signale von dem Sensor 26 weitergeleitet.

Mit Hilfe des Befestigungssockels 6 wird das Sensorgehäuse 2 befestigt. Das Sensorgehäuse 2 ist dabei austauschbar an dem Befestigungssockel 6 montiert. Dabei ist es erwünscht bzw. erforderlich, dass der Sensor 26 bei einem Austausch wieder exakt an derselben Position fixiert ist, wie der ursprüngliche Sensor 26.

Der Befestigungssockel 6 weist Befestigungsöffnungen 28 auf, um den Befestigungssockel 6 auf einer Unterlage, beispielsweise einem nicht dargestellten Montagekörper zu befestigen. Beispielsweise werden herkömmliche Schrauben verwendet, um den Befestigungssockel 6 auf einer Unterlage bzw. dem Montagekörper zu befestigen.

Figur 2 ist eine Ansicht von oben gemäß der Darstellung aus Figur 1.

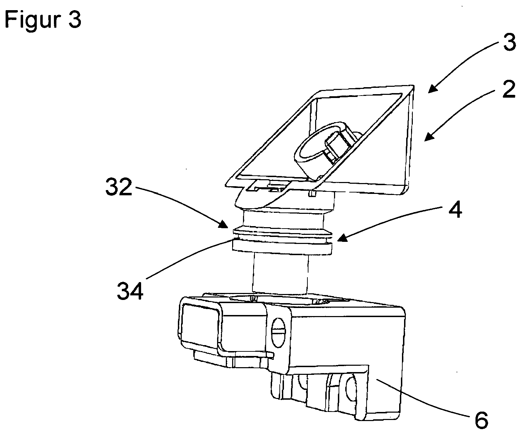

Figur 3 zeigt den Befestigungssockel 6 schematisch in einer perspektivischen Ansicht, wobei das Sensorgehäuse 2 nur teilweise dargestellt ist. Der Befestigungsflansch 4 ist gemäß Figur 3 noch nicht in dem Befestigungssockel 6 angeordnet. Der Befestigungsflansch 4 weist zwischen dem freien Ende und dem Sensorgehäuse 2 einen radial hervorstehenden umlaufenden Vorsprung 32 auf, der selbst eine umlaufende radiale Befestigungsnut 34 aufweist. Diese Befestigungsnut 34 dient zur Verriegelung des Befestigungsflansches 4 in dem Befestigungssockel 6.

Der Befestigungsflansch 4 kann auch andere Formen, beispielsweise eine quadratische oder rechteckige Form aufweisen. Dadurch kann der Sensor auf bestimmte Montagerichtungen beschränkt werden, so dass der Sensor nicht in dem Befestigungssockel 6 drehbar gelagert ist.

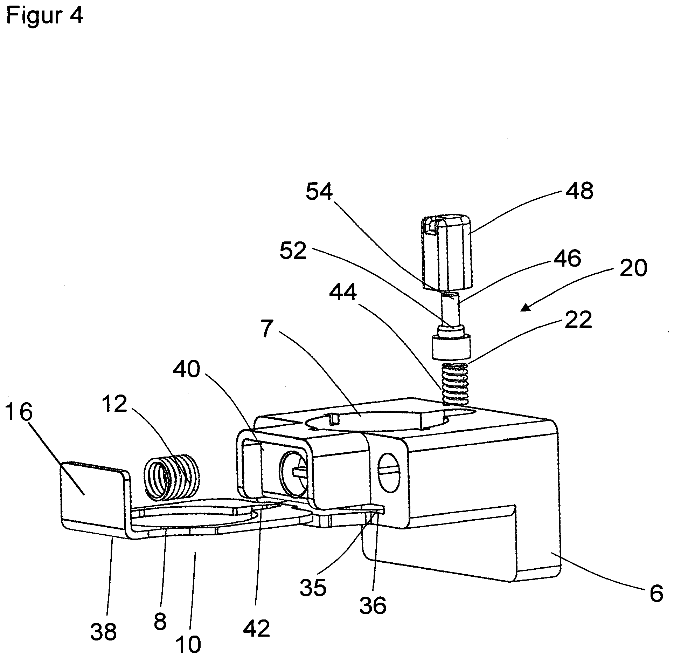

Figur 4 zeigt einen beispielhaften Befestigungssockel 6 in einer Explosionsdarstellung. Der Befestigungssockel 6 weist eine Durchgangsöffnung 7 für den Befestigungsflansch 4 auf. Weiter weist der Befestigungssockel 6 eine Führung 35, insbesondere einen Führungsschacht 36 für den Fixierungsschieber 10 auf. Der Fixierungsschieber 10 ist verschiebbar in der Führung 35 bzw. dem Führungsschacht 36 angeordnet. Der Fixierungsschieber 10 weist weiter ein Betätigungsmittel 38 auf, um den Fixierungsschieber 10 entweder mit einem Finger oder einem Werkzeug zu betätigen.

Weiter ist optional eine Kammer 40 mit einer ersten Feder 12 angeordnet. Die erste Feder 12 ist zwischen dem Befestigungssockel 6 und dem Fixierungsschieber 10 angeordnet, wobei die erste Feder 12 zusammengedrückt wird, wenn das Betätigungsmittel 38 des Fixierungsschiebers 10 betätigt wird. Dadurch wird der Fixierungsschieber 10 nicht betätigt in einer Verriegelungsstellung gehalten.

Am Rand der Durchgangsöffnung 7 des Befestigungssockels 6 ist in einer Aussparung 44 des Befestigungssockels 6 ein Verriegelungsschieber 20 angeordnet. Der Verriegelungsschieber 20 ist beispielsweise durch ein Schiebeelement 46, eine zweite Feder 22 und ein Betätigungselement 48 gebildet. Das Schiebelement 46 ist beispielsweise zylindrisch ausgeführt mit einem zylinderförmigen Abschnitt mit zwei unterschiedlichen Durchmessern 52 und 54. Durch die zweite Feder 22 wird der Verriegelungsschieber 20 fixiert. In dieser Position ist der Fixierungsschieber 10 von einer Verriegelungsstellung in eine Montageposition bewegbar.

An dem Fixierungsschieber 10 ist auch eine Durchgangsöffnung 8 und eine Aussparung 42 angeordnet. Die Durchgangsöffnung 8 und die Aussparung 42 des Fixierungsschiebers 10 entsprechen dem Querschnitt der Durchgangsöffnung 7 und der Aussparung 44 des Befestigungssockels 6.

Der Befestigungssockel 6, das Schiebeelement 46 und das Bestätigungselement 48 sind beispielsweise aus Kunststoff, insbesondere im Spritzgussverfahren hergestellt. Jedoch ist es auch möglich, diese Elemente aus Stahl, insbesondere aus rostfreiem Stahl herzustellen. Der Fixierungsschieber 10, die erste Feder 12 und die zweite Feder 22 sind vorzugsweise aus Stahl oder rostfreiem Stahl hergestellt.

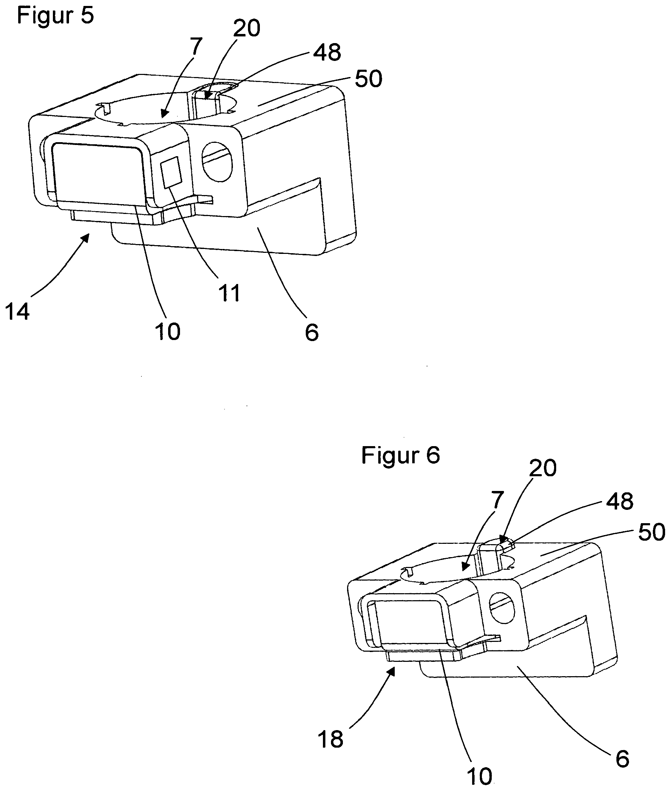

Figur 5 zeigt den Befestigungssockel 6 mit den Teilen aus Figur 4 in einem montierten Zustand. Dabei ist der Fixierungsschieber 10 in einem nicht betätigen Zustand, nämlich in einer Verriegelungsstellung 14 dargestellt. Dabei ist die Durchgangsöffnung des Fixierungsschiebers 10 und die Durchgangsöffnung 7 des Befestigungssockels 6 gegeneinander verschoben, so dass der Fixierungsschieber 10 in die Befestigungsnut des nicht dargestellten Befestigungsflansches ragt. Das Betätigungselement 48 des Verriegelungsschiebers 20 ist dabei bündig mit einer Seitenfläche 50 des Befestigungssockels 6.

Gemäß Figur 5 sind optional Blockiermittel 11 vorgesehen, wodurch der Fixierungsschieber 10 in der Verriegelungsstellung 14 blockierbar ist. Durch das betätigte Blockiermittel 11 ist gewährleistet, dass das Elektronikgerät bzw. das Sensorgehäuse nicht durch ein versehentliches Betätigen des Fixierungsschiebers 10 bzw. des Betätigungsmittels gelöst wird, so dass dieses in die Montageposition gelangen würde, so dass das Elektronikgerät bzw. das Sensorgehäuse nicht mehr fixiert bzw. verriegelt wäre. Bei betätigtem Blockiermittel 11 kann der Fixierschieber 10 bzw. das Betätigungsmittel nicht betätigt werden. Erst nach einem Lösen des Blockiermittels 11 kann der Fixierschieber 10 bzw. das Betätigungsmittel betätigt werden.

Figur 6 zeigt den Befestigungssockel 6 aus Figur 5, wobei der Fixierungsschieber 10 in einem betätigten Zustand abgebildet ist, so dass der Fixierungsschieber 10 in einer Montageposition 18 angeordnet ist, so dass die Durchgangsöffnung des Fixierungsschiebers 10 und die Durchgangsöffnung 7 des Befestigungssockels 6 bündig übereinanderliegen, so dass der Befestigungsflansch 4 des Sensorgehäuses in die Durchgangsöffnung des Fixierungsschiebers 10 und des Befestigungssockels 6 eingeschoben werden kann. Das Betätigungselement 48 des Verriegelungsschiebers 20 steht dabei aus einer Seitenfläche 50 des Befestigungssockels 6 hervor.

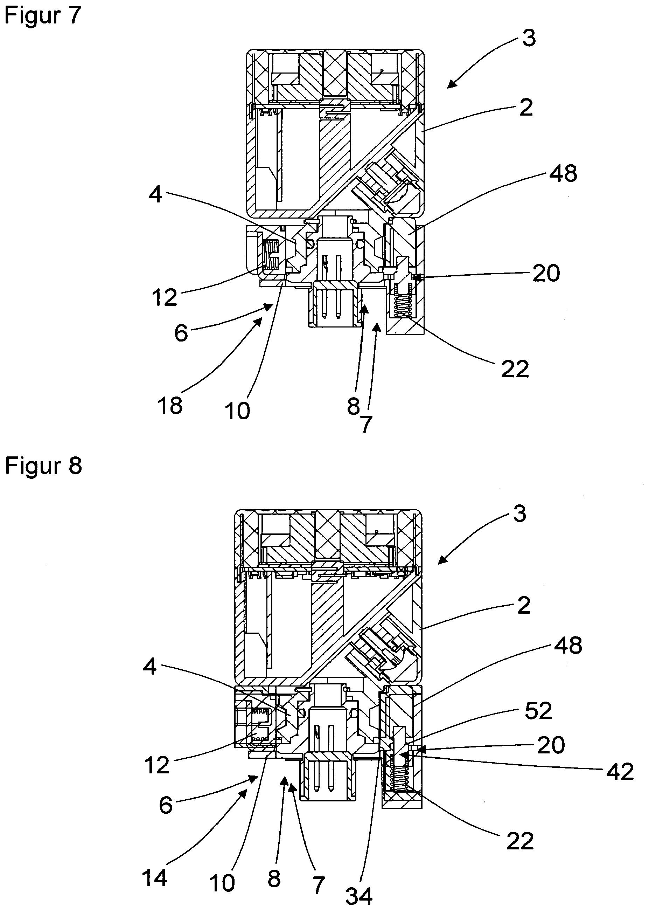

Figur 7 zeigt das Sensorgehäuse 2 mit dem Befestigungsflansch 4 und dem Befestigungssockel 6 in einer Schnittdarstellung. Der Fixierungsschieber 10 ist dabei in einem betätigten Zustand abgebildet, so dass die Durchgangsöffnung 7 des Befestigungssockels 6 und die Durchgangsöffnung 8 des Fixierungsschiebers 10 deckungsgleich sind. Diese Position des Fixierungsschiebers 10 ist durch die Position des Verriegelungsschiebers 20 fixiert. Der Verriegelungsschieber 20 wird durch die zweite Feder 22 in dieser Position gehalten. Dabei steht der Verriegelungsschieber 20, bzw. das Betätigungselement 48 des Verriegelungsschiebers 20 über die Seitenfläche des Befestigungssockels 6 hinaus. Der Fixierungsschieber 10 ist in dieser Position durch die erste Feder 12 vorgespannt. In dieser Montageposition 18 des Fixierungsschiebers 10 kann das Sensorgehäuse 2 mit dem Befestigungsflansch 4 in die Durchgangsöffnung 7 des Befestigungsflansches 6 eingeschoben werden. Dabei erreicht eine Seitenwand des Sensorgehäuses 2 den Verriegelungsschieber 20 bzw. das Betätigungselement 48 des Verriegelungsschiebers 20, wodurch dieser in Richtung der zweiten Feder 22 gedrückt wird. Dieser Zustand ist in Figur 8 dargestellt.

Gemäß Figur 8 ist der Verriegelungsschieber 20 in Richtung der zweiten Feder 22 bewegt. Dadurch wird der Verriegelungsschieber 20 derart verschoben, dass der Durchmesser 52 des Verriegelungsschiebers 20 an der Stelle der Aussparung 42 des Fixierungsschiebers 10 verringert wird, wodurch die Aussparung 42 des Fixierungsschiebers 10 nicht mehr durch den Verriegelungsschieber 20 fixiert wird und der Fixierungsschieber 10 durch die erste Feder 12 in Richtung der ersten Feder 12 verschoben wird, so dass der Fixierungsschieber 10 in die Befestigungsnut 34 des Befestigungsflansches 4 eingreift, wodurch der Befestigungsflansch 4 axial in dem Befestigungssockel 6 fixiert ist. Je nach Form der Befestigungsnut 34 und des Fixierungsschiebers 10 kann auch zusätzlich eine radiale Fixierung erreicht werden.

Zum Lösen des Sensorgehäuses 2 wird der Fixierungsschieber 10 wieder gegen die erste Feder 12 gedrückt. Dadurch sind die Durchgangsöffnungen 7 des Befestigungssockels 7 und des Fixierungsschiebers 10 wieder deckungsgleich, wodurch der Befestigungsflansch 4 axial aus dem Befestigungssockel 6 entfernt werden kann. Beim Entfernen des Sensorgehäuses 2 wird der Verriegelungsschieber 20 durch die zweite Feder 22 wieder in Richtung des Sensorgehäuses 2 bewegt, wodurch der Fixierungsschieber 10 durch die Aussparung wieder in der Montageposition 18 fixiert ist.

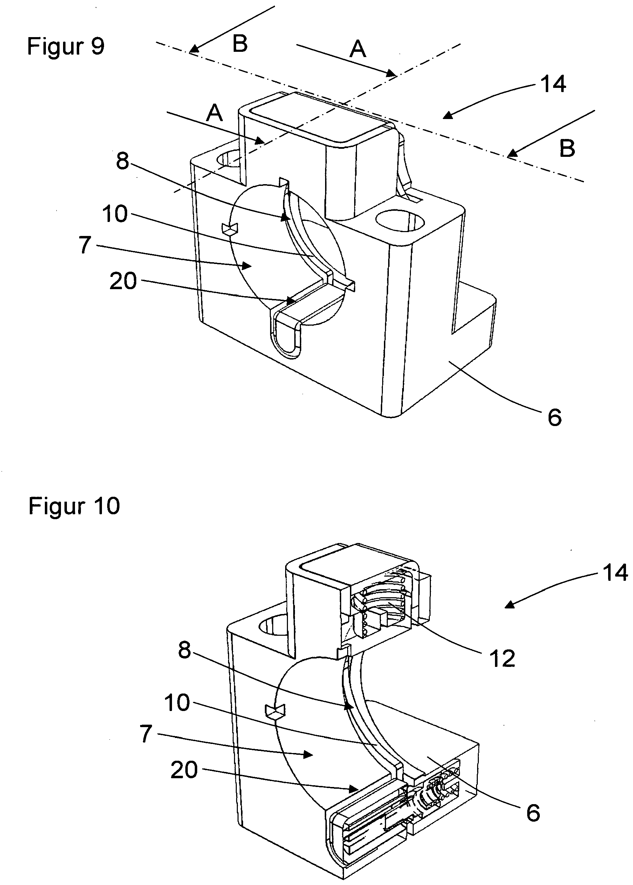

Figur 9 zeigt perspektivisch den Befestigungssockel 6 mit dem Fixierungsschieber 10 und dem Verriegelungsschieber 20, jedoch ohne Sensorgehäuse, so dass die Durchgangsöffnung 7 des Befestigungssockels 6 sichtbar ist. Figur 9 zeigt den Fixierungsschieber 10 in einer Verriegelungsstellung 14, in der dieser durch die erste Feder gehalten ist. Die Durchgangsöffnung 8 des Fixierungsschiebers 10 ist dabei nicht bündig mit der Durchgangsöffnung 7 des Befestigungssockels 10. In dieser Stellung ist das Sensorgehäuse entweder in dem Befestigungssockel 6 fixiert oder kann nicht in die Durchgangsöffnung 7 eingeschoben werden.

Figur 10 zeigt eine Schnittdarstellung in Richtung A-A gemäß Figur 9.

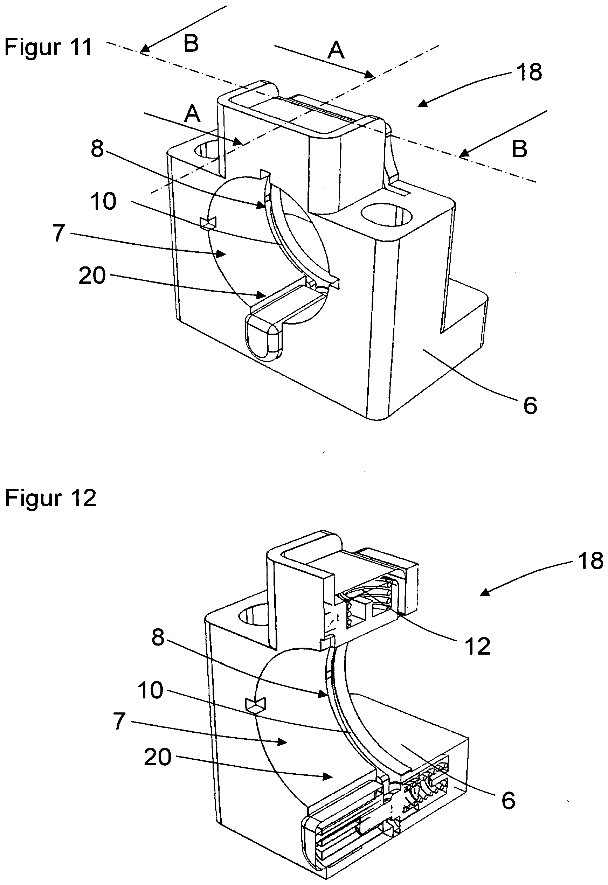

Figur 11 zeigt perspektivisch den Befestigungssockel 6 mit dem Fixierungsschieber 10 und dem Verriegelungsschieber 20, jedoch ohne Sensorgehäuse, so dass die Durchgangsöffnung 7 des Befestigungssockels 6 sichtbar ist. Figur 11 zeigt den Fixierungsschieber 10 in einer Montageposition 18, in der dieser beispielsweise entgegen der Federkraft der ersten Feder durch einen Finger gehalten ist. Die Durchgangsöffnung 8 des Fixierungsschiebers 10 ist dabei bündig mit der Durchgangsöffnung 7 des Befestigungssockels 6. In dieser Stellung ist das Sensorgehäuse 2 entweder nicht in dem Befestigungssockel 6 fixiert oder kann in die Durchgangsöffnung 7 zur Montage eingeschoben werden.

Figur 12 zeigt eine Schnittdarstellung in Richtung A-A gemäß Figur 11.

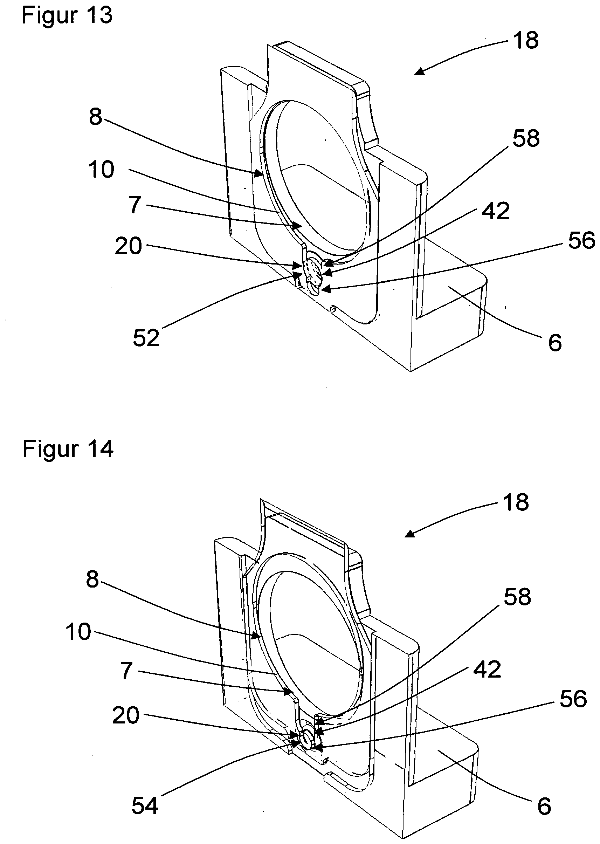

Figur 13 zeigt eine Schnittdarstellung in Richtung B-B gemäß Figur 11. Dabei ist die Durchgangsöffnung 7 des Befestigungssockels 6 und die Durchgangsöffnung 8 des Fixierungsschiebers 8 bündig. Der größere Durchmesser 52 des Verriegelungsschiebers 20 fixiert den Fixierungsschieber 10 über dessen Aussparung 42. Die Aussparung 42 des Fixierungsschiebers 10 weist hierzu einen ersten Abstand 56 und einen zweiten weiteren Abstand 58 auf. Der größere Durchmesser 52 des Verriegelungsschiebers 20 greift in den zweiten weiteren Abstand 58 der Aussparung 42 des Fixierungsschiebers 10 ein, so dass dieser nicht mehr in Richtung der nicht dargestellten ersten Feder verschoben werden kann. Wird jedoch ein Sensorgehäuse mit einem Befestigungsflansch in den Befestigungssockel 6 eingeschoben, so wird der Verriegelungsschieber 20 an der Stelle des Fixierungsschiebers 10 von dem größeren Durchmesser 52 zu einem kleineren Durchmesser 54 verschoben. Dies ist in Figur 14 dargestellt.

Figur 14 zeigt eine Schnittdarstellung in Richtung B-B gemäß Figur 9. Figur 14 zeigt den kleineren Durchmesser 54 des Verriegelungsschiebers 20. Dadurch, dass der größere Durchmesser 52 des Verriegelungsschiebers 20 den Fixierungsschieber 10 nicht mehr fixiert, wird der Fixierungsschieber 10 durch die erste Feder in Richtung der ersten Feder 12 gedrückt, so dass die Aussparung 42 mit dem ersten kleineren Abstand 56 in den kleineren Durchmesser 54 des Verriegelungsschiebers 20 greift und diesen zusammen mit der ersten Feder 12 in einer Verriegelungsstellung 14 fixiert. Dabei ist die Durchgangsöffnung 8 des Fixierungsschiebers 10 und die Durchgangsöffnung 7 des Befestigungssockels 6 nicht mehr bündig zueinander.

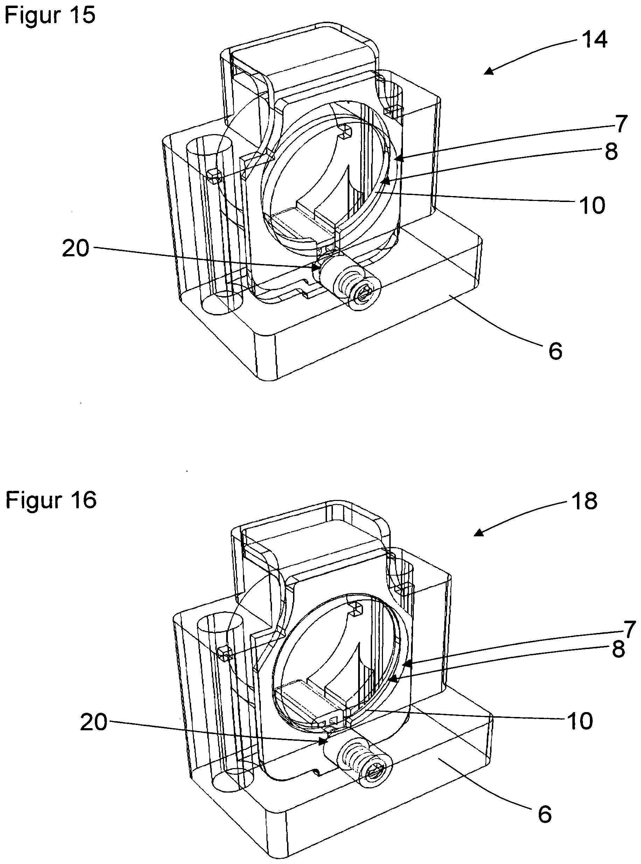

Figur 15 zeigt perspektivisch den Befestigungssockel 6 mit dem Fixierungsschieber 10 und dem Verriegelungsschieber 20, jedoch ohne Sensorgehäuse 2, so dass die Durchgangsöffnung 7 des Befestigungssockels 6 sichtbar ist in einer transparenten Darstellung. Figur 15 zeigt den Fixierungsschieber 10 in einer Verriegelungsstellung 14, in der dieser durch die erste Feder gehalten ist. Die Durchgangsöffnung 8 des Fixierungsschiebers 10 ist dabei nicht bündig mit der Durchgangsöffnung 7 des Befestigungssockels 6. In dieser Stellung ist das Sensorgehäuse entweder in dem Befestigungssockel 6 fixiert oder kann nicht in die Durchgangsöffnung 7 eingeschoben werden.

Figur 16 zeigt perspektivisch den Befestigungssockel 6 mit dem Fixierungsschieber 10 und dem Verriegelungsschieber 20, jedoch ohne Sensorgehäuse 2, so dass die Durchgangsöffnung 7 des Befestigungssockels 6 sichtbar ist in einer transparenten Darstellung. Figur 16 zeigt den Fixierungsschieber 10 in einer Montageposition 18, in der dieser beispielsweise entgegen der Federkraft der ersten Feder durch einen Finger gehalten ist. Die Durchgangsöffnung 8 des Fixierungsschiebers 10 ist dabei bündig mit der Durchgangsöffnung 7 des Befestigungssockels 6. In dieser Stellung ist das Sensorgehäuse entweder nicht in dem Befestigungssockel 6 fixiert oder kann in die Durchgangsöffnung 7 zur Montage eingeschoben werden.

### Bezugszeichen:

- 1: Befestigungsvorrichtung
- 2: Sensorgehäuse
- 3: Elektronikgerät
- 4: Befestigungsflansch
- 6: Befestigungssockel
- 7: Durchgangsöffnung des Befestigungssockels
- 8: Durchgangsöffnung des Fixierungsschiebers
- 10: Fixierungsschieber
- 11: Blockiermittel
- 12: erste Feder
- 14: Verriegelungsstellung
- 16: Betätigungsfläche
- 18: Montageposition
- 20: Verriegelungsschieber
- 22: zweite Feder
- 24: elektrische Schnittstelle
- 26: Sensor
- 28: Befestigungsöffnungen
- 32: Vorsprung
- 34: Befestigungsnut
- 35: Führung
- 36: Führungsschacht
- 38: Betätigungsmittel
- 40: Kammer
- 42: Aussparung des Fixierungsschiebers
- 44: Aussparung des Befestigungssockels
- 46: Schiebeelement
- 48: Betätigungselement
- 50: Seitenfläche
- 52: größerer Durchmesser des Verriegelungsschiebers
- 54: kleinerer Durchmesser des Verriegelungsschiebers
- 56: erster kleinerer Abstand der Aussparung
- 58: zweiter größerer Abstand der Aussparung

## Patentansprüche

1. Befestigungsvorrichtung für ein Elektronikgerät (3) mit einem Befestigungsflansch (4) und mit einem Befestigungssockel (6), wobei der Befestigungsflansch (4) in einer Durchgangsöffnung (8) in dem Befestigungssockel (6) positionierbar ist und wobei der Befestigungsflansch (4) in dem Befestigungssockel (6) verriegelbar ist,
wobei die Befestigungsvorrichtung einen Fixierungsschieber (10) und einen Verriegelungsschieber (20) aufweist, wobei der Fixierungsschieber (10) verschiebbar an dem Befestigungssockel (6) angeordnet ist, um den Befestigungsflansch (4) in dem Befestigungssockel (6) zu verriegeln und/oder zu lösen, **dadurch gekennzeichnet, dass** der Fixierungsschieber (10) eine Betätigungsfläche (16) aufweist, wobei der Fixierungsschieber (10) durch Verschieben durch die Betätigungsfläche (16) in eine Montageposition (18) für den Befestigungsflansch (4) gebracht ist, wobei der Befestigungsflansch (4) in die Durchgangsöffnung (8) des Befestigungssockels (6) einführbar ist, wobei der Fixierungsschieber (10) in der Montageposition (18) durch den Verriegelungsschieber (20) gehalten ist.

2. Befestigungsvorrichtung nach Anspruch 1, **dadurch gekennzeichnet, dass** der Fixierungsschieber (10) eine erste Feder (12) aufweist, wobei der Fixierungsschieber (10) durch die erste Feder (12) in der Verriegelungsstellung (14) positioniert ist.

3. Befestigungsvorrichtung nach Anspruch 1, **dadurch gekennzeichnet, dass** der Verriegelungsschieber (20) durch eine zweite Feder (22) positioniert ist.

4. Befestigungsvorrichtung nach einem der vorhergehenden Ansprüche 1 bis 3, **dadurch gekennzeichnet, dass** der Verriegelungsschieber (20) beim Einführen des Befestigungsflansches (4) in den Befestigungssockel (6) durch das Elektronikgerät (3) verschiebbar ist, wodurch eine Verriegelung des Fixierungsschiebers (10) durch den Verriegelungsschieber (20) gelöst ist, wodurch der Fixierungsschieber (10) von einer Montageposition (18) in die Verriegelungsstellung (14) durch die erste Feder (12) bewegt ist.

5. Befestigungsvorrichtung nach einem der vorhergehenden Ansprüche 3 bis 4, **dadurch gekennzeichnet, dass** beim Lösen des Befestigungssockels durch den Fixierungsschieber der Befestigungssockel durch den Verriegelungsschieber aufgrund der zweiten Feder auswerfbar ist.

6. Befestigungsvorrichtung nach einem der vorhergehenden Ansprüche, **dadurch gekennzeichnet, dass** Blockiermittel (11) vorgesehen sind, wodurch der Fixierungsschieber (10) in der Verriegelungsstellung (14) blockierbar ist.

7. Verfahren zum Befestigen eines Elektronikgeräts (3) mit einem Befestigungsflansch (4) in einem Befestigungssockel (6), wobei der Befestigungsflansch (4) in dem Befestigungssockel (6) positioniert wird, wobei der Befestigungsflansch (4) in dem Befestigungssockel (6) verriegelt wird,
wobei
ein Fixierungsschieber (10) angeordnet ist, der an dem Befestigungssockel (6) verschoben wird, um den Befestigungsflansch (4) in dem Befestigungssockel (6) zu verriegeln und/oder zu lösen, **dadurch gekennzeichnet, dass** der Fixierungsschieber (10) eine Betätigungsfläche (16) aufweist, wobei der Fixierungsschieber (10) durch Verschieben durch die Betätigungsfläche (16) in eine Montageposition für den Befestigungsflansch (4) gebracht wird, wobei der Befestigungsflansch (4) in die Durchgangsöffnung (8) des Befestigungssockels (6) eingeführt wird, wobei der Fixierungsschieber (10) in der Montageposition (18) durch einen Verriegelungsschieber (20) gehalten wird.

8. Verfahren zum Befestigen eines Elektronikgeräts (3) nach Anspruch 7, **dadurch gekennzeichnet, dass** der Fixierungsschieber (10) eine erste Feder (12) aufweist, wobei die erste Feder (12) den Fixierungsschieber (10) in der Verriegelungsstellung (14) fixiert.

9. Verfahren zum Befestigen eines Sensorgehäuses (2) nach Anspruch 7,
**dadurch gekennzeichnet, dass** der Verriegelungsschieber (20) durch eine zweite Feder (22) fixiert wird.

10. Verfahren zum Befestigen eines Elektronikgeräts (3) nach einem der vorhergehenden Ansprüche 7 bis 9, **dadurch gekennzeichnet, dass** der Verriegelungsschieber (20) beim Einführen des Befestigungsflansches (4) in den Befestigungssockel (6) durch das Elektronikgerät (2) verschoben wird, wodurch eine Verriegelung des Fixierungsschiebers (10) durch den Verriegelungsschieber (20) gelöst wird, wodurch der Fixierungsschieber (10) von einer Montageposition (18) in die Verriegelungsstellung (14) durch die erste Feder (12) bewegt wird.

11. Verfahren zum Befestigen eines Elektronikgeräts (3) nach einem der vorhergehenden Ansprüche 7 bis 10, **dadurch gekennzeichnet, dass** beim Lösen des Befestigungssockels durch den Fixierungsschieber der Befestigungssockel durch den Verriegelungsschieber aufgrund der zweiten Feder ausgeworfen wird.

12. Verfahren zum Befestigen eines Elektronikgeräts (3) nach einem der vorhergehenden Ansprüche 7 bis 11, **dadurch gekennzeichnet, dass** Blockiermittel (11) vorgesehen sind, wodurch der Fixierungsschieber (10) in der Verriegelungsstellung (14) blockiert wird.

## Claims

1. Fastening apparatus for an electronic device (3) having a fastening flange (4) and having a fastening base (6), wherein the fastening flange (4) can be positioned in a passage opening (8) in the fastening base (6) and wherein the fastening flange (4) can be locked in the fastening base (6),
wherein a fixing slider (10) is displaceably arranged at the fastening base (6) to lock and/or to release the fastening flange (4) in the fastening base (6),
wherein the fastening apparatus having a fixing slider (10) and a locking slider (20), wherein the fixing slider (10) has an actuation surface (16), the fixing slider (10) is brought into an assembly position (18) for the fastening flange (4) by displacement by the actuation surface (16), and the fastening flange (4) can be introduced into the passage opening (8) of the fastening base (6) and
wherein the fixing slider (10) is held in the assembly position (18) by the locking slider (20).

2. A fastening apparatus in accordance with claim 1, wherein the fixing slider (10) has a first spring (12) and the fixing slider (19) is positioned in the locking position (14) by the first spring (12).

3. A fastening apparatus in accordance with claim 1, wherein the locking slider (20) is positioned by a second spring (22).

4. A fastening apparatus in accordance with claim 2, wherein the locking slider (20) can be displaced by the electronic device (3) on an introduction of the fastening flange (4) into the fastening base (6), whereby a locking of the fixing slider (10) by the locking slider (20) is released, and wherein the fixing slider (10) is moved from an assembly position (18) into the locking position (14) by the first spring (12).

5. A fastening apparatus in accordance with claim 5, wherein the fastening base can be ejected by the locking slider due to the second spring on a release of the fastening base by the fixing slider.

6. A fastening apparatus in accordance with claim 1, wherein blocking means (11) are provided, whereby the fixing slider (10) can be blocked in the locking position (14).

7. Method for fastening an electronic device (3) having a fastening flange (4) in a fastening base (6), wherein the fastening flange (4) is positioned in the fastening base (6) and wherein the fastening flange (4) is locked in the fastening base (6), the improvement wherein
a fixing slider (10) is provided which is displaced at the fastening base (6) to lock and/or to release the fastening flange (4) in the fastening base (6),
wherein the fixing slider (10) has an actuation surface (16) and the fixing slider (10) is brought into an assembly position for the fastening flange (4) by displacement by the actuation surface (16) and wherein the fastening flange (4) is introduced into the passage opening (8) of the fastening base (6) and wherein the fixing slider (10) is held in the assembly or installed position (18) by a locking slider (20).

8. A method for fastening an electronic device (3) in accordance with claim 9, wherein the fixing slider (10) has a first spring (12), wherein the first spring (12) fixes the fixing slider (10) in the locking position (14).

9. A method for fastening a sensor housing (2) in accordance with claim 9, wherein the locking slider (20) is fixed by a second spring (22).

10. A method for fastening an electronic device (3) in accordance with claim 10, wherein the locking slider (20) is displaced by the electronic device (2) on the introduction of the fastening flange (4) into the fastening base (6), whereby a locking of the fixing slider (10) by the locking slider (20) is released, and wherein the fixing slider (10) is moved from an assembly position (18) into the locking position (14) by the first spring (12).

11. A method for fastening an electronic device (3) in accordance with claim 13, wherein the fastening base is ejected by the locking slider due to the second spring on the release of the fastening base by the fixing slider.

12. A method for fastening an electronic device (3) in accordance with claim 9, wherein blocking means (11) are provided, whereby the fixing slider (10) is blocked in the locking position (14).

## Revendications

1. Dispositif de fixation d'un appareil électronique (3), comportant une bride de fixation (4) et un socle de fixation (6), la bride de fixation (4) pouvant être positionnée dans une ouverture traversante (8) dans le socle de fixation (6) et la bride de fixation (4) pouvant être verrouillée dans le socle de fixation (6),
dans lequel
le dispositif de fixation comprend un coulisseau de fixation (10) et un coulisseau de verrouillage (20), le coulisseau de fixation (10) est agencé mobile en coulissement sur le socle de fixation (6), afin de verrouiller et/ou de détacher la bride de fixation (4) dans le socle de fixation (6), **caractérisé en ce que** le coulisseau de fixation (10) présente une surface d'actionnement (16),
le coulisseau de fixation (10) est amené dans une position de montage (18) pour la bride de fixation (4) par déplacement par la surface d'actionnement,
la bride de fixation (4) est susceptible d'être introduite dans l'ouverture traversante (8) du socle de fixation (6), le coulisseau de fixation (10) est retenu dans la position de montage (81) par le coulisseau de verrouillage (20).

2. Dispositif de fixation selon la revendication 1, **caractérisé en ce que** le coulisseau de fixation (10) comprend un premier ressort (12), le coulisseau de fixation (10) étant positionné dans la position de verrouillage (14) par le premier ressort (12).

3. Dispositif de fixation selon la revendication 1, **caractérisé en ce que** le coulisseau de verrouillage (20) est positionné par un second ressort (22).

4. Dispositif de fixation selon l'une des revendications précédentes 1 à 3,
**caractérisé en ce que** lors de l'introduction de la bride de fixation (4) dans le socle de fixation (6), le coulisseau de verrouillage (20) est déplaçable par l'appareil électronique (3), grâce à quoi un verrouillage du coulisseau de fixation (10) par le coulisseau de verrouillage (20) est détaché, grâce à quoi le coulisseau de fixation (10) est déplacé d'une position de montage (18) jusque dans la position de verrouillage (14) par le premier ressort (12).

5. Dispositif de fixation selon l'une des revendications précédentes 3 à 4,
**caractérisé en ce que** lors du détachement du socle de fixation par le coulisseau de fixation, le socle de fixation est apte à être éjecté par le coulisseau de verrouillage en raison du second ressort.

6. Dispositif de fixation selon l'une des revendications précédentes, **caractérisé en ce que** il est prévu des moyens de blocage (11) par lesquels le coulisseau de fixation (10) est apte à être bloqué dans la position de verrouillage (14).

7. Procédé de fixation d'un appareil électronique (3) avec une bride de fixation (4) dans un socle de fixation (6), dans lequel la bride de fixation (4) est positionnée dans le socle de fixation (6), la bride de fixation (4) est verrouillée dans le socle de fixation (6),
et dans lequel
il est prévu un coulisseau de fixation (10) qui est déplacé sur le socle de fixation (6) afin de verrouiller et/ou de détacher la bride de fixation (4) dans le socle de fixation (6), **caractérisé en ce que** le coulisseau de fixation (10) présente une surface d'actionnement (16), le coulisseau de fixation (10) est amené dans une position de montage pour la bride de fixation (4) par déplacement par la surface d'actionnement (16), la bride de fixation (4) est introduite dans l'ouverture traversante (8) du socle de fixation (6), le coulisseau de fixation (10) est retenu dans la position de montage (18) par un coulisseau de verrouillage (20).

8. Procédé de fixation d'un appareil électronique (3) selon la revendication 7, **caractérisé en ce que** le coulisseau de fixation (10) présente un premier ressort (12), le premier ressort (12) fixant le coulisseau de fixation (10) dans la position de verrouillage (14).

9. Procédé de fixation d'un boîtier de capteur (2) selon la revendication 7, **caractérisé en ce que** le coulisseau de verrouillage (20) est fixé par un second ressort (22).

10. Procédé de fixation d'un appareil électronique (3) selon l'une des revendications précédentes 7 à 9, **caractérisé en ce que** lors de l'introduction de la bride de fixation (4) dans le socle de fixation (6), le coulisseau de verrouillage (20) est déplacé par l'appareil électronique (2), ce qui fait détacher un verrouillage du coulisseau de fixation (10) par le coulisseau de verrouillage (20), ce qui fait déplacer le coulisseau de fixation (10) depuis la position de montage (18) jusque dans la position de verrouillage (14) par le premier ressort (12).

11. Procédé de fixation d'un appareil électronique (3) selon l'une des revendications précédentes 7 à 10, **caractérisé en ce que** lors du détachement du socle de fixation par le coulisseau de fixation, le socle de fixation est éjecté par le coulisseau de verrouillage en raison du second ressort.

12. Procédé de fixation d'un appareil électronique (3) selon l'une des revendications précédentes 7 à 11, **caractérisé en ce qu'**il est prévu des moyens de blocage (11) par lesquels le coulisseau de fixation (10) est bloqué dans la position de verrouillage (14).
